# EUROPÄISCHE PATENTANMELDUNG

(11) **EP 2 400 618 A2**
(43) Veröffentlichungstag der Anmeldung: **28.12.2011**
(21) Anmeldenummer: 11004950.9
(22) Anmeldetag: 17.06.2011
(51) Int. Cl.: H02J 3/00

(54) **Aktor und Energiemanagementsystem mit solchen Aktoren**

(30) Priorität: 24.06.2010 DE 102010024992
(71) Anmelder: Diehl AKO Stiftung & Co. KG, 88239 Wangen (DE); MSR-Office GmbH, 88239 Wangen (DE)
(72) Erfinder: Simon, Helmut, 88260 Argenbühl (DE); Leonhardt, Armin, 88239 Wangen (DE); Kaps, Werner, 88171 Weiler-Simmerberg (DE)
(74) Vertreter: Diehl Patentabteilung

(57) **Zusammenfassung**

Ein Aktor (12a, 12b, 12c) zur Leistungssteuerung wenigstens eines angeschlossenen Verbrauchers (10a, 10b, 10c, 10d) weist eine Lasterfassungseinrichtung (22) zum Erfassen einer Lasthöhe und/oder einer Lastart des wenigstens einen Verbrauchers (10a, 10b, 10c, 10d) als eine die Last des wenigstens einen Verbrauchers betreffende Messgröße und eine Kommunikationsschnittstelle (16) zum Empfangen wenigstens einer Stellgröße für die Leistungssteuerung des wenigstens einen Verbrauchers (10a, 10b, 10c, 10d) und Senden der durch die Lasterfassungseinrichtung (22) erfassten Messgröße. Derartige Aktoren (12a, 12b, 12c) können in vorteilhafter Weise in ein Energiemanagementsystem, wie beispielsweise eines Hausautomatisierungssystems, integriert werden.

## Beschreibung

Die vorliegende Erfindung betrifft einen Aktor zur Leistungssteuerung wenigstens eines angeschlossenen Verbrauchers sowie ein Energiemanagementsystem, beispielsweise in Form eines Hausautomatisierungssystems, mit mehreren solchen Aktoren.

Energiemanagement- bzw. Hausautomatisierungssysteme umfassen üblicherweise eine Anzahl elektronischer Geräte oder Komponenten (z.B. Leuchten, Jalousien, etc.), deren Betrieb durch diesen zugeordnete Aktoren bzw. Steilglieder gesteuert wird. Mehrere solcher Aktoren werden wiederum von einer Steuereinheit zentral angesteuert, wobei je nach Anwendungsfall eine oder mehrere Steuerebenen vorhanden sein können.

Herkömmliche Systeme enthalten eine drahtgebundene Kommunikationsverbindung zwischen der. Steuereinheit und den Aktoren. Darüber hinaus sind aber auch Aktoren mit einer Funkschnittstelle oder einer Netzleitungsschnittstelle für die Datenkommunikation bekannt, was insbesondere für die nachträgliche Installation eines Energiemanagementsystems vorteilhaft ist.

Je nach Anwendungsfall werden von dem Energiemanagementsystem zahlreiche elektronische Geräte oder Komponenten angesteuert und verwaltet. Dabei existieren typischerweise Geräte und Komponenten mit unterschiedlichen Lasten und Lastverhalten, die zum Teil auch unterschiedliche Ansteuerungen erfordern. So offenbart zum Beispiel die EP 0 801 836 B1 ein Energiemanagement- bzw. Hausautomatisierungssystem mit zahlreichen Aktoren zur Leistungssteuerung (Dimmen, Abschalten) von Verbrauchern, bei welchem die Aktoren die Leistungsaufnahmen der angeschlossenen Verbraucher überwachen können, um deren Ansteuerung zum Reduzieren der Energiekosten verändern zu können.

Es ist eine Aufgabe der vorliegenden Erfindung, einen verbesserten Aktor zur Leistungssteuerung wenigstens eines angeschlossenen Verbrauchers zu schaffen, der für den Einsatz in einem Energiemanagementsystem bzw. Hausautomatisierungssystem geeignet ist.

Diese Aufgabe wird gelöst durch einen Aktor mit den Merkmalen des Anspruchs 1. Vorteilhafte Ausgestaltungen und Weiterbildungen der Erfindung sind Gegenstand der abhängigen Ansprüche.

Der erfindungsgemäße Aktor zur Leistungssteuerung wenigstens eines angeschlossenen Verbrauchers weist eine Lasterfassungseinrichtung zum Erfassen einer Lasthöhe und/oder einer Lastart des wenigstens einen Verbrauchers als eine die Last des wenigstens einen Verbrauchers betreffende Messgröße und eine Kommunikationsschnittstelle zum Empfangen wenigstens einer Stellgröße für die Leistungssteuerung des wenigstens einen Verbrauchers und Senden der durch die Lasterfassungseinrichtung erfassten Messgröße auf.

Durch die Kommunikationsschnittstelle kann der Aktor in vorteilhafter Weise in ein Energiemanagementsystem integriert werden.

Da der Aktor eine Lasterfassungseinrichtung zum Erfassen einer Lasthöhe (z.B. kleine Last, mittlere Last, große Last) und/oder einer Lastart (z.B. resistiv, kapazitiv, induktiv) des wenigstens einen Verbrauchers als eine die Last des wenigstens einen Verbrauchers betreffende Messgröße und zudem eine Kommunikationsschnittstelle zum Empfangen wenigstens einer Stellgröße für die Leistungssteuerung des wenigstens einen Verbrauchers und zum Senden der durch die Lasterfassungseinrichtung erfassten Messgröße aufweist, können der Aktor selbst und eine mit dem Aktor gekoppelte Steuereinheit gezielt auf den jeweiligen Verbraucher, der an den Aktor angeschlossen ist, reagieren und so eine optimierte Ansteuerung des Verbrauchers (in Abhängigkeit von dessen Lasthöhe und Lastart) erzielen.

An den Aktor ist in der Regel wenigstens ein Verbraucher angeschlossen, d.h. der Aktor kann im Rahmen der Erfindung nur einen Verbraucher steuern oder auch mehrere (z.B. zwei, drei, vier, ...) Verbraucher steuern.

In einem Sonderfall ist kein Verbraucher unmittelbar an den Aktor angeschlossen. Ein solcher Aktor empfängt ein externes Schaltsignal, das er an einen anderen Aktor weiterleitet, damit dieser den unmittelbar angeschlossenen Verbraucher schaltet.

Vorzugsweise ist die Lasterfassungseinrichtung auch zum Erfassen einer von dem wenigstens einen Verbraucher aufgenommenen Leistung als Messgröße ausgestaltet.

In einer bevorzugten Ausgestaltung der Erfindung ist die Kommunikationsschnittstelle ausgewählt aus einer Funkschnittstelle und einer Netzleitungsschnittstelle. Hierdurch entfallen in vorteilhafter Weise zusätzliche drahtgebundene Datenleitungen, sodass die Flexibilität im Gesamtsystem erhöht werden kann, der Installationsaufwand reduziert werden kann und das Energiemanagement in einfacher Weise auch noch nachträglich installiert werden kann. Außerdem kann durch Platzeinsparungen im Anschlussbereich (durch den Wegfall von Steuerleitungen) das Einbauvolumen zusätzlich verkleinert werden. Grundsätzlich ist die vorliegende Erfindung aber auch auf Systeme mit einer drahtgebundenen Kommunikation anwendbar.

In einer weiteren Ausgestaltung der Erfindung weist der Aktor ferner eine Steuerschaltung zur Leistungssteuerung des wenigstens einen Verbrauchers auf, welche in Abhängigkeit von der durch die Lasterfassungseinrichtung erfassten Messgröße nach einer von wenigstens zwei Steuerungsarten betreibbar ist. Diese wenigstens zwei Steuerungsarten sind dabei ausgewählt aus einer sinusförmigen Steuerung, einer Phasenabschnittsteuerung und einer Phasenanschnittsteuerung. Auf diese Weise kann die Leistungssteuerung des an den Aktor angeschlossenen Verbrauchers an die aktuellen Bedingungen (Art der Last, Leistungsaufnahme des Verbrauchers) angepasst werden.

In einer vorteilhaften Weiterbildung weist der Aktor wenigstens einen Versorgungsanschluss zur Spannungsversorgung und wenigstens einen Ausgang auf, über den eine eingespeiste Netzspannung unverändert durchschleifbar ist.

In anderen Worten, ein Versorgungsanschluss und ein Ausgang eines Aktors kann mehrfach ausgeführt sein, wobei über den Ausgang die eingespeiste Netzspannung unverändert durchschleifbar ist, beispielsweise an einen anderen Aktor. Vorteilhaft an dieser Ausgestaltung ist, dass eine externe Klemme für weitere Anschlüsse entfallen kann, beispielsweise wenn eine weitere Klemme, eine Steckdose oder sonstiger Verbraucher direkt zweipolig angeschlossen werden soll. Durch die Verringerung der Anzahl einzelner Klemmenblöcke wird der Platzbedarf der Installation insgesamt reduziert. Als Folge kann in einer engen Schaltdose die Installation auch ohne aufwändigen Austausch der vorhandenen Schaltdose gegen eine größere montiert werden.

In einer bevorzugten Alternative weist der Aktor wenigstens einen elektrischen Steuereingang zur Einspeisung eines Schaltsignals wenigstens eines externen Schaltelements auf.

Neben der Kommunikationsschnittstelle (Funk-, Netzleitungs- oder anderweitig drahtgebundene Kommunikationsschnittstelle) ist wenigstens ein mit der Steuerschaltung verbundener Steuereingang zur Einspeisung eines Signals vorgesehen, das durch Betätigung eines Schaltelements, wie beispielsweise Schalter oder Tasters, erzeugbar ist. Vorteilhaft an dieser Ausgestaltung ist, dass parallel zur Funksteuerung auch eine vorhandene oder eine neu zu installierende Umgebung aus konventionellen Schaltern zur Steuerung des Aktors genutzt werden kann.

In einer weiteren Ausführungsform ist ein Schaltzustand des Aktors unabhängig von der Polarität der in dem wenigstens einen Steuereingang eingespeisten Spannung veränderbar.

Besonders vorteilhaft an dieser Ausführungsform ist, dass ein in den Steuereingang eingespeistes Eingangssignal mit beliebiger elektrischer Polarität eine Änderung eines Schaltzustandes bewirkt. So ist beispielsweise im Zustand 1 der Steuereingang elektrisch offen, im Zustand 2 kann der Eingang wahlweise mit Netz N oder mit Netz L verbunden sein. Es wird also diejenige Polarität zur Signalisierung des aktiven Zustandes genutzt, welche gerade in der jeweiligen Installationsumgebung zur Verfügung steht.

Vorteilhafter Weise ist der wenigstens eine Steuereingang derart konfigurierbar, dass abhängig von einer Dauer und/oder von einem Zustandswechsel eines anstehenden Schaltsignals eines Schaltelements der Schaltzustand veränderbar ist.

Wird der Aktor in eine bestehende Installation zum Schalten einer Last, wie beispielsweise ein Licht in einem Treppenhaus, integriert, können dort Taster zu Betätigung der Last vorhanden sein. Derartige Taster erzeugen einen relativ kurzen Impuls als Schaltsignal, das solange anhält und an dem Steuereingang anliegt, wie der Taster gedrückt ist. Der Benutzer erwartet, dass ein erster solcher Impuls die Last, beispielsweise ein Licht, einschaltet, und ein zweiter solcher Impuls die Last wieder ausschaltet. Alternativ zu einem Taster kann ein einfacher Schalter oder eine Wechselschaltung zum Schalten der Last installiert sein. In diesem Fall erzeugt der Schalter am Steuereingang ein Signal, welches solange andauert, wie die Last, z.B. ein Licht eingeschaltet sein soll. Erst nach erneutem Betätigen des Schalters verschwindet das Schaltsignal und die Last ist ausgeschaltet. Abhängig von der Art des vor Ort befindlichen Schaltmittels und der Dauer dessen Schaltsignals ist der Steuereingang mittels Software so konfigurierbar, dass ein Zustandswechsel (z.B. ein- oder ausschalten) infolge eines kurzen, weniger als etwa eine Sekunde dauernden Schaltsignals, wie das eines Tasters, erfolgen kann oder infolge eines dauerhaft anstehenden Schaltsignals, das sich von dem vorhergehenden Schaltsignal unterscheidet, wie das eines Schalters.

Zusätzlich oder alternativ dazu ist der Steuereingang mittels Software so konfigurierbar, dass ein Zustandswechsel infolge eines langen, etwa eine Sekunde oder länger dauernden Schaltsignals erfolgen kann. So kann beispielsweise mit einem lang anhaltenden Schaltsignal die Leistung des Verbrauchers vom Momentanwert ausgehend verändert werden. Beispielsweise steigt die Leistung in Stufen bis zum Maximalwert an, um dann bei anhaltendem oder erneutem Signal wieder in Stufen bis zu einem unteren Schwellwert abzufallen. Analog kann die Leistung bis zum Minimalwert verringert und wieder bis zum oberen Schwellwert erhöht werden.

In einer weiteren Ausgestaltung weist der Aktor wenigstens zwei Steuereingänge auf, wobei jedem dieser Steuereingänge ein Schaltelement zugeordnet ist, wobei die Steuereingänge derart konfigurierbar sind, dass bei Anstehen eines Schaltsignals eines Schaltelements am ersten Steuereingang ein erster Schaltzustand vorliegt und bei Anstehen eines Schaltsignals eines Schaltelements am zweiten Steuereingang ein zweiter Schaltzustand vorliegt.

Sind die Schalteingänge so konfigurierbar, dass bei Betätigung eines dem jeweiligen Schalteingang zugeordneten Schaltelements ein bestimmter Schaltzustand eingestellt wird, kann in vorteilhafter Weise eine Erhöhung der Benutzerfreundlichkeit erreicht werden. So wird beispielsweise bei Betätigung eines ersten Tasters eine erste Aktion ausgelöst, wie Heben eines elektrischen Fensterladens, Herabgelassen einer Markise oder Öffnen eines Garagentors und bei Betätigung eines zweiten Tasters wird die jeweils gegenläufige Aktion ausgelöst.

In einer besonders vorteilhaften Weiterbildung sind die Steuereingänge derart konfigurierbar, dass der erste und der zweite Schaltzustand durch ein kurzzeitiges Anstehen des Schaltsignals einstellbar sind und durch ein über einen längeren Zeitraum anstehendes Schaltsignal eine einem Verbraucher zuführbare Leistung veränderbar ist.

Durch die Möglichkeit Steuereingänge so zu konfigurieren, dass unterschiedliche Zustandsänderungen mit verschiedenen Schaltsignalen verknüpft sind, lassen sich in vorteilhafter Weise komplexe Schaltvorgänge für einen Verbraucher mit nur einem Aktor realisieren. So könnte beispielsweise durch ein kurzes, weniger als etwa eine Sekunde dauerndes Schaltsignal eines ersten bzw. eines zweiten Tasters ein Verbraucher, wie eine Lampe, ein- bzw. ausgeschaltet werden. Zusätzlich könnte durch ein langes, etwa eine Sekunde oder länger dauerndes Schaltsignal eine Leistungssteuerung des Verbrauchers erfolgen, beispielsweise die Helligkeitssteuerung einer Lampe. Ausgehend vom Momentanwert wird, bei Anstehen eines langen Schaltsignals, die dem Verbraucher zugeführte Leistung in Stufen mit zeitlichem Abstand verändert. Bei langem Betätigen des ersten Tasters steigt die dem Verbraucher zugeführte Leistung ausgehend vom Momentanwert an, bis beispielsweise der Maximalwert erreicht ist. Bei langem Betätigen des zweiten Tasters fällt die dem Verbraucher zugeführte Leistung ausgehend vom Momentanwert ab, bis beispielsweise der Minimalwert erreicht ist.

In einer bevorzugten Alternative sind die Steuereingänge derart konfigurierbar, dass ein Wechsel in denselben Schaltzustand des Aktors auslösbar ist, unabhängig von der Polarität eines Schaltsignals eines Schaltelements und/oder von dem Steuereingang, an dem ein Schaltsignal eines Schaltelements ansteht.

Vorteilhaft an einem solchen Aktor ist, dass dieser auch mit einer vorhandenen Verkabelung eines Hauses einsetzbar ist, ohne zusätzliche Leitungen verlegen zu müssen. In bestehenden Verkabelungen reicht nämlich die Zahl an Leitungen oft nicht aus, um ein Schaltsignal mit der erforderlichen Polarität erzeugen zu können, das einen bestimmten Zustandswechsel bewirkt. Soll beispielsweise das in einem Treppenhaus Licht mit verschiedenen Tastern schaltbar sein, kann es sein, dass an einem Taster nur eine Spannung der Polarität L anliegt, an einem anderen Taster hingegen nur eine Spannung der Polarität N. Infolge der an den Tastern anliegenden unterschiedlichen Polarität, lässt sich ein bestimmter Zustandswechsel, beispielsweise das Einschalten des Lichts nicht realisieren. Durch die individuelle Konfigurierbarkeit eines jeden Steuereingangs jedoch, ist ein Schaltsignal mit beliebiger Polarität als Auslöser eines bestimmten Zustandswechsels definierbar. Das Licht ist durch betätigen eines beliebigen Tasters einschaltbar, unabhängig von der am Taster anliegenden Polarität.

Zusätzlich oder alternativ dazu ist der Steuereingang mittels Software so konfigurierbar, dass ein Wechsel in denselben Zustand des Aktors auslösbar ist, wenn an einem von zwei oder mehr Steuereingängen ein Schaltsignal mit beliebiger Polarität ansteht. Die zwei oder mehr Steuereingänge wirken so, als handle es sich um einen einzigen Steuereingang. So könnte beispielsweise an dem ersten der zwei oder mehr Steuereingänge ein Schaltsignal der Polarität L anstehen oder an dem zweiten der zwei oder mehr Steuereingänge ein Signal der Polarität N anstehen. Unabhängig davon, an welchem der Steuereingänge ein Schaltsignal ansteht, wechselt der Aktor seinen Zustand.

Der oben beschriebene Aktor der Erfindung kann in vorteilhafter Weise in ein Energiemanagementsystem, insbesondere in Form eines Hausautomatisierungssystems integriert werden. Dieses Energiemanagementsystem umfasst dann mehrere Verbraucher; wenigstens eine Steuereinheit; wenigstens einen erfindungsgemäßen Aktor, welcher der wenigstens einen Steuereinheit zugeordnet bzw. mit dieser gekoppelt ist, zur Leistungssteuerung der Verbraucher; und wenigstens eine Kommunikationsverbindung zwischen der wenigstens einen Steuereinheit und dem wenigstens einen Aktor.

Bei der Kommunikationsverbindung handelt es sich üblicherweise um eine bidirektionale Verbindung, sodass einerseits von der Steuereinheit Stellgrößen an die Aktoren gesendet werden können und andererseits von den Aktoren die von ihren Lasterfassungseinrichtungen erfassten Messgrößen an die Steuereinheit übermittelt werden können.

Das Energiemanagementsystem kann neben der Ebene der Aktoren und der Ebene der Steuereinheit je nach Anwendungsfall weitere Ebenen zwischen den Aktoren und der Steuereinheit und/oder oberhalb der Steuereinheit enthalten.

Üblicherweise ist eine Steuereinheit mit mehreren Aktoren gekoppelt, es kann aber auch nur ein Aktor von einer Steuereinheit angesteuert werden. In dem Energiemanagementsystem können nur eine Steuereinheit oder mehrere Steuereinheiten vorgesehen sein. Falls mehrere Steuereinheiten vorgesehen sind, sind diese typischerweise mit einer Zentraleinheit und/oder miteinander verbunden.

Die Kommunikationsverbindung ist vorzugsweise ausgewählt aus einer Funkverbindung und einer Netzleitung. Im Rahmen der vorliegenden Erfindung sind aber grundsätzlich auch drahtgebundene Kommunikationsverbindungen möglich. Außerdem kann die Kommunikationsverbindung auch in unterschiedlichen Varianten ausgeführt sein, d.h. zum Beispiel kann ein Teil der Aktoren mit der Steuereinheit über Funk verbunden sein, während ein anderer Teil der Aktoren mit der Steuereinheit über eine Netzleitung in Verbindung steht.

In einer Ausgestaltung der Erfindung weist die wenigstens eine Steuereinheit zudem eine Auswerteeinrichtung zum Auswerten der durch die Lasterfassungseinrichtungen der Aktoren erfassten Messgrößen auf.

In einer weiteren Ausgestaltung der Erfindung ist die wenigstens eine Steuereinheit ferner mit einer Ausgabevorrichtung zum Ausgeben der durch die Lasterfassungseinrichtungen der Aktoren erfassten Messgrößen und/oder der Auswertungsergebnisse der Auswerteeinrichtung versehen.

In einer noch weiteren Ausgestaltung der Erfindung ist die wenigstens eine Steuereinheit ferner mit einer Eingabevorrichtung zum Eingeben von Stellgrößen für die Leistungssteuerung der an die Aktoren angeschlossenen Verbraucher betreffenden Eingabegrößen versehen. Bei diesen Eingabegrößen kann es sich zum Beispiel um gewünschte Temperaturen, Helligkeiten und dergleichen der Verbraucher und um Uhrzeiten der gewünschten Veränderungen handeln.

In einer vorteilhaften Weiterbildung ist durch ein am Steuereingang eines Aktors anstehendes Schaltsignal der wenigstens eine zugeordnete Verbraucher dieses und/oder wenigstens eines über die Kommunikationsverbindung verbundenen anderen Aktors ansteuerbar.

In anderen Worten bewirkt ein an einem Steuereingang eines Aktors anstehendes Schaltsignal, dass nicht nur der an dem Aktor angeschlossene Verbraucher ansteuerbar ist, sondern mittels Signalübertragung über die Kommunikationsschnittstelle ein anderer Aktor veranlasst werden kann, den an dem anderen Aktor angeschlossenen Verbraucher anzusteuern. So ist es beispielsweise möglich, dass bei Betätigung eines Schalters, der über einen ersten Steuereingang mit einem Aktor verbunden ist, eine an ihm angeschlossene Last, wie eine Lampe, ein- und ausschaltbar ist. Zusätzlich oder alternativ dazu leitet der Aktor ein Schaltsignal über eine Kommunikationsverbindung an einen anderen Aktor, dessen Last, beispielsweise ein Garagentoröffner, das Garagentor öffnet oder schließt. In analoger Weise ist es auch möglich, dass einem Aktor keine eigene Last zugeordnet ist und er lediglich als Fernschalter dient.

Eine andere Variante sieht vor, dass eine Betätigung eines Schaltelements ein Schaltsignal auslöst, das an einen Steuereingang eines Aktors geleitet wird. Als Reaktion auf das Schaltsignal löst der Aktor eine Folge von gleichzeitigen und/oder zeitlich versetzten Schaltvorgängen aus. Beispielsweise könnten mit dem Einschalten einer Lampe in einem Raum gleichzeitig mehrere Decken- und Stehleuchten eingeschaltet werden. Zusätzlich wird nach einiger Zeit ein Ventilator eingeschaltet, sofern zwischenzeitlich das Licht nicht wieder ausgeschaltet worden ist. In einer weiteren Variante können auch Steuereingänge einer Gruppe von Aktoren so konfiguriert werden, dass bei Betätigung eines beliebigen Schaltelements, dessen Schaltsignal an einem Steuereingang eines beliebigen Aktors ansteht, der Aktor über die Kommunikationsverbindung die Gruppe von Aktoren ansteuert und die vorgesehene Schaltfolge auslöst.

Es ist auch denkbar, dass lediglich ein Taster in der Installation zur Verfügung steht und dieser Taster mehrere Aktoren sowie deren zugeordnete Verbraucher steuern soll. In diesem Fall kann die Zuordnung des Steuersignals an einen Steuereingang eines bestimmten Aktors eine vordefinierte Tastfolge sein. Beispielsweise kann die Taste einmal kurz betätigen bedeuten, dass der Verbraucher des ersten Aktors geschaltet wird. Eine zweimalige Betätigung der Taste kurz hintereinander würde des Verbraucher des zweiten Aktors schalten, etc. Es sind beliebige Tastfolgen denkbar, welche entweder fest vordefiniert sein können oder durch den Benutzer dem System eintrainierbar sind.

Obige sowie weitere Merkmale und Vorteile der Erfindung werden aus der nachfolgenden Beschreibung eines bevorzugten, nicht-einschränkenden Ausführungsbeispiels unter Bezug auf die beiliegende Zeichnung besser verständlich. Darin zeigen:
- Figur 1: eine funktionelle Darstellung des Aufbaus eines beispielhaften Energiemanagementsystems mit mehreren Aktoren gemäß der vorliegenden Erfindung und
- Figur 2: eine schematische Darstellung einer beispielhaften Verschaltung mehrerer Aktoren.

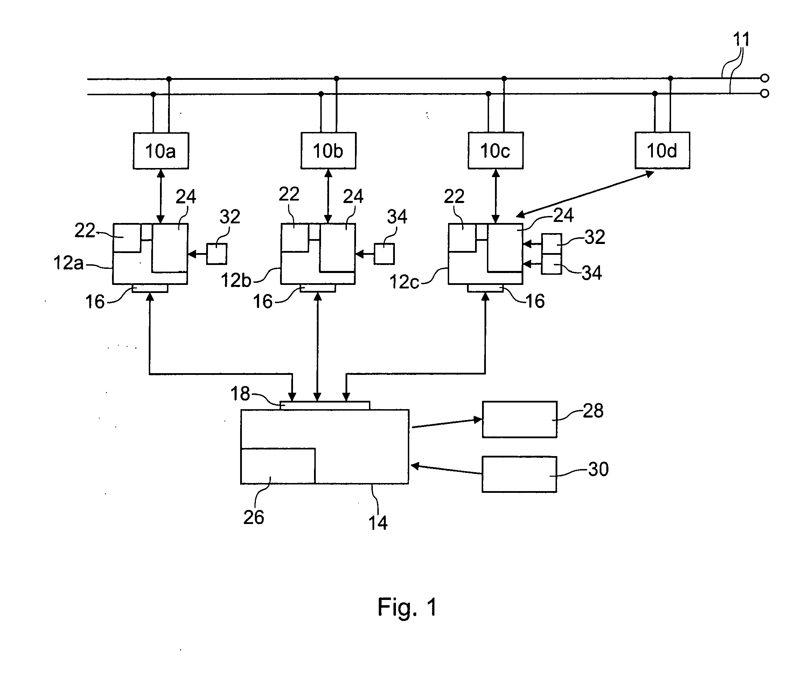

In Figur 1 ist beispielhaft ein Hausautomatisierungssystem dargestellt, welches der Steuerung von vier elektronischen Verbrauchern 10a, 10b, 10c, 10d dient. Die Verbraucher 10a..d sind dabei in üblicher Weise an ein Stromnetz 11 angeschlossen.

Der erste Verbraucher 10a ist mit einem ersten Aktor bzw. Stellglied 12a gekoppelt, der zweite Verbraucher 10b ist mit einem zweiten Aktor 12b gekoppelt, und der dritte und der vierte Verbraucher 10c, 10d sind mit einem dritten Aktor 12c gekoppelt.

Die drei Aktoren 12a..c sind ihrerseits mit einer Steuereinheit 14 gekoppelt. Zu diesem Zweck weisen die Aktoren 12a..c jeweils eine erste Kommunikationsschnittstelle 16 auf und weist die Steuereinheit 14 eine zweite Kommunikationsschnittstelle 18 auf. Die zweite Kommunikationsschnittstelle 18 der Steuereinheit 14 ist mit den ersten Kommunikationsschnittstellen 16 der Aktoren 12a..c über eine Kommunikationsverbindung 20 gekoppelt. Bei dieser Kommunikationsverbindung 20 handelt es sich beispielsweise um eine Funkverbindung oder eine Netzleitung.

Die Aktoren 12a..c, die beispielsweise als Dimmer ausgebildet sind, sind jeweils mit einer Lasterfassungseinrichtung 22 und einer Steuerschaltung 24 ausgestattet. Die Lasterfassungseinrichtungen 22 dienen jeweils der automatischen Erfassung von Messgrößen betreffend die Last des an den jeweiligen Aktor 12a..c angeschlossenen Verbrauchers 10a..d. Zu diesen Messgrößen zählen die Lasthöhe (kleine Last, mittlere Last, große Last, etc.) und die Lastart (resistiv, induktiv, kapazitiv) sowie vorzugsweise auch die Leistungsaufnahme des Verbrauchers / der Verbraucher 10a..d. Die Steuerschaltungen 24 dienen jeweils der Leistungssteuerung der angeschlossenen Verbraucher 10a..d

Mit den durch die Lasterfassungseinrichtungen 22 gewonnenen Messgrößen können die Aktoren 12a..c dann die Ansteuerung der jeweils angeschlossenen Verbraucher 10a..d optimieren. So kann die Steuerschaltung 24 den / die Verbraucher 10a..d zum Beispiel bei einer kleinen Last nach dem Prinzip der Sinusdimmung ansteuern. Die sinusförmige Ansteuerung von kleinen Leistungsverbrauchern 10a..d kann die harmonischen Störungen auf dem Stromnetz 11 reduzieren und so eine kostengünstigere Ausgestaltung von elektronisch geregelten Verbrauchern erlauben.

Bei größeren Lasten arbeiten die Steuerschaltungen 24 der Aktoren 12a..c vorzugsweise nach dem Phasenabschnittprinzip, falls es sich bei den angeschlossenen Verbrauchern 10a..d um resistive Lasten wie beispielsweise Glühlampen oder kapazitive Lasten wie beispielsweise Energiesparlampen handelt, oder nach dem Phasenanschnittprinzip, falls es sich bei den angeschlossenen Verbrauchern 10a..d um induktive Lasten wie beispielsweise Halogentransformatoren handelt.

Wesentlicher Unterschied zwischen diesen Schaltprinzipien sind die elektronischen Schaltelemente. Bei Phasenanschnittsteuerungen sind dies vorwiegend Triacs, in besonderen Fällen aber auch MOSFETs oder IGBTs, wohingegen bei Phasenabschnittsteuerungen MOSFETs oder IGBTs verwendet werden. Bei diesen Schaltelementen kann beim Ein- oder Ausschalten die Anstiegs- bzw. Abfallgeschwindigkeit des Verbraucherstroms eingestellt werden. Hierdurch kann eine im Einbauvolumen große Drossel, wie sie üblicherweise bei herkömmlichen Dimmern eingesetzt wird, um den Stromanstieg zu begrenzen, entfallen. Die Steuerschaltungen 24 der Aktoren 12a..c werden dadurch kompakter und kostengünstiger.

Eine mit MOSFETs oder IGBTs aufgebaute Steuerschaltung 24 erlaubt zudem die sinusförmige Ansteuerung der Last nach dem Pulsweitenmodulationsverfahren. Dabei entsteht im Effektivwert der Versorgungsspannung ein Sinussignal, welches im Gegensatz zu den vorgenannten Steuerverfahren praktisch keine harmonischen Verzerrungen auf der Netzleitung 11 verursacht und daher die ideale Ansteuerung für alle Arten von Belastung darstellt. Wegen der fehlenden großen Stromlücke kann ein Pufferkondensator im Netzteil einer nachgeschalteten elektronischen Last verkleinert werden.

In dem genannten Phasenanschnittverfahren wird üblicherweise ein Leistungsschalter zu einem vorwählbaren Zündwinkel bezogen auf die sinusförmigen Netzhalbwellen niederohmig und schließt somit den Stromkreis mit einem Verbraucher 10a..d. Der Zündwinkel ist dabei ein Maß für den Betrag eines vorgegebenen Sollwertes, der dem Aktor 12a..c von der Steuereinheit 14 zum Beispiel in Form einer Stellgröße übermittelt wird. Im Nulldurchgang des Stromes durch den Leistungsschalter wird der Leistungsschalter dann wieder hochohmig. Am Beispiel einer Glühlampe bedeutet dies, dass beim Einschalten beispielsweise in der Mitte einer Sinushalbwelle ein sehr großer Einschaltstrom entsteht, welcher zu hörbarem Summen des Glühfadens führt. Das Phasenabschnittverfahren vermeidet diese Stromspitze, indem der Verbraucher im Spannungsnulldurchgang zugeschaltet wird und der Strom deshalb nicht hart ansteigt. Analog gilt dies für den Ladestrom eines Zwischenkreiskondensators von Netzteilen für Energiesparlampen. Hier werden durch das sanfte Zuschalten die Netzverzerrungen und die Verlustleistung im Zwischenkreiskondensator reduziert. Die Phasenabschnittsteuerung ist daher im Allgemeinen für die Ansteuerung von Glühlampen und moderneren Leuchtmitteln wie Energiesparlampen weitaus besser geeignet. Das Phasenanschnittverfahren besitzt Vorteile bei der Ansteuerung induktiver Lasten. Der harte Stromanstieg wird dabei durch die Induktivität gemindert. Andererseits wird eine Überspannungsspitze bei der Abschaltung vermieden, indem im Stromnulldurchgang ausgeschaltet wird. Dies geschieht bei einem Triac inhärent aufgrund seiner Bauteileigenschaft. Bei Schaltern wie MOSFETs und IGBTs kann das Ausschalten kontrolliert gesteuert werden. Ein ideales Schaltverhalten für alle Lasten wäre mit einer in der Amplitude geregelten sinusförmigen Ansteuerung erzielbar. Dem kommt technisch die Pulsweitenmodulation nahe. Allerdings liegen bei der Pulsweitenmodulation aufgrund zahlreicher Schaltvorgänge ein höheres Störspektrum und eine erhöhte Schaltveriustleistung vor. Daher ist dieses Verfahren nur für kleinere Lastströme vorteilhaft.

Die automatische Erkennung von Lastart und Lasthöhe sowie die Messung der aufgenommenen Leistung durch die Lasterfassungseinrichtungen 22 der Aktoren 12a..c erlauben es, ein geeignetes Ansteuermuster für die Verbraucher 10a..d wie oben beschrieben zu finden. Dabei wird vorzugsweise bei kleiner Last die sinusförmige Ansteuerung gewählt. Da hierbei in den Schalttransistoren eine erhöhte Verlustleistung entsteht und die Höhe der Funkstörsignale vergrößert wird, schaltet das System ab einem bestimmten Lastwert automatisch bei induktiver Last auf die Phasenanschnittsteuerung um, sonst auf die Phasenabschnittsteuerung.

Die Umstellung des Ansteuerprinzips der Steuerschaltung 24 in Abhängigkeit von den durch die Lasterfassungseinrichtung 22 erfassten Messgrößen kann entweder durch den Aktor 12a..c selbst erfolgen oder durch die Steuereinheit 14 veranlasst werden.

Die Steuereinheit 14 ist mit einer Auswerteeinrichtung 26 ausgestattet, um die von den Lasterfassungseinrichtungen 22 der Aktoren 12a..c erfassten Messgrößen auszuwerten und ggf. die an die Aktoren 12a..c zu übermittelnden Stellgrößen entsprechend anzupassen.

Außerdem ist die Steuereinheit 14 mit einer Ausgabevorrichtung 28 (z.B. Display, Bildschirm, Drucker, etc.) und einer Eingabevorrichtung 30 (z.B. Tastatur, Touch Screen, etc.) versehen. Über die Ausgabevorrichtung 28 können dem Benutzer zum Beispiel die von den Lasterfassungseinrichtungen 22 der Aktoren 12a..c erfassten Messgrößen und/oder die Auswertungsergebnisse der Auswerteeinrichtung 26 der Steuereinheit 14 angezeigt bzw. ausgedruckt werden. Durch die Messung der Leistungsaufnahme der Verbraucher 10a..d, die Übermittlung dieser Messgrößen an die Steuereinheit 14 und die Ausgabe dieser Messgrößen bzw. entsprechender Auswertungsergebnisse hat der Benutzer zum Beispiel die Möglichkeit, den Verbrauch der an das Energiemanagement angeschlossenen Verbraucher zu überwachen und ggf. sein Verbrauchsverhalten anzupassen. Zudem kann eine in der Steuereinheit 14 oder in einer übergeordneten Zentraleinheit vorgesehene intelligente Regelung automatisiert Einfluss auf die von den Verbrauchern 10a..d aufgenommenen Leistungen nehmen.

Wie in Figur 1 dargestellt, sind die Aktoren 12a..c üblicherweise ferner mit Sensoren 32 und/oder Schaltelementen 34, wie Schaltern oder Tastern gekoppelt, über welche zum Beispiel die Umgebungshelligkeit erfasst oder eine Leuchte direkt eingeschaltet werden kann. In einem Sonderfall können einzelne Aktoren 12a..c keine direkte Kopplung mit Sensoren 32 und/oder Schaltelementen 34 aufweisen, sondern sind indirekt über die Kommunikationsschnittstelle 16 mit Sensoren 32 und/oder Schaltelementen 34 eines anderen Aktors 12a..c gekoppelt.

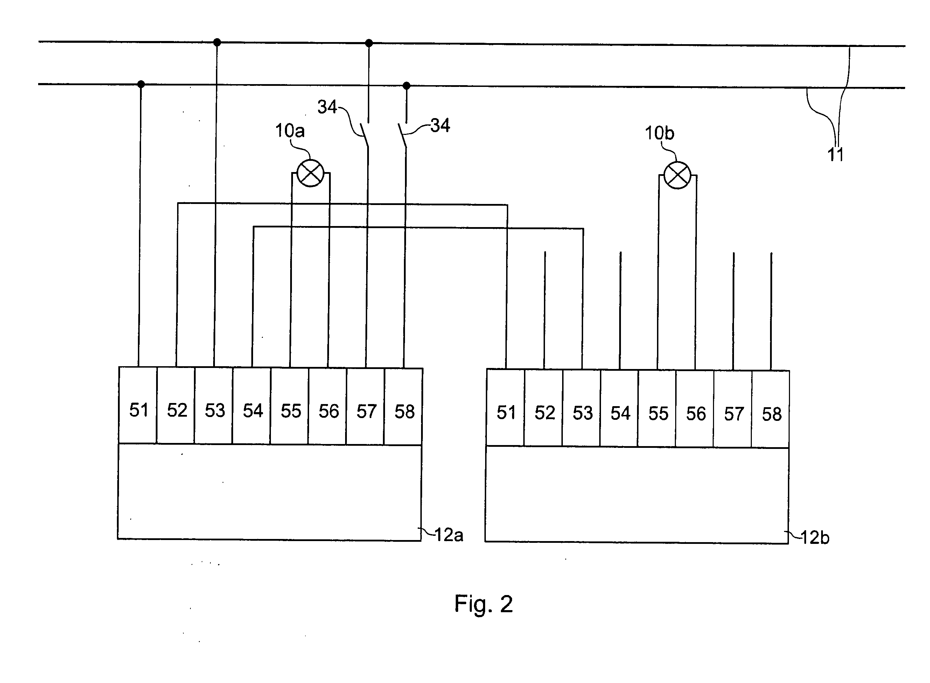

In Figur 2 ist die schematische Verschaltung am Beispiel zweier Aktoren 12a und 12b dargestellt, wobei aus Gründen der Übersichtlichkeit auf die Darstellung von weiteren Aktoren 12c..z und auf in Figur 1 gezeigte Einzelheiten verzichtet wurde.

Jeder Aktor 12a und 12b weist zwei Versorgungsanschlüsse 51 und 53 zum Einspeisen von Netzspannung und zwei Ausgänge 52 und 54 auf, wobei die Versorgungsanschlüsse 51 und 53 des Aktors 12a mit der Netzleitung 11 verbunden sind und die eingespeiste Netzspannung über die Ausgänge 52 und 54 des Aktors 12a unverändert zu den Versorgungsanschlüssen 51 und 53 des Aktors 12b durchschleifbar ist. Mögliche weitere Aktoren 12c..z können auf diese Weise ebenfalls mit Netzspannung versorgt werden. Alternativ könnte jeder Aktor 12a..z über seine Versorgungsanschlüsse 51 und 53 direkt mit der Netzleitung 11 verbunden sein.

Jeder Aktor 12a und 12b weist zwei Anschlüsse 55 und 56 zum Versorgen eines Verbrauchers 10a bzw. 10b mit Spannung auf, der über einen Aktor 12a oder 12b steuerbar ist.

Weiter weist jeder Aktor 12a und 12b zwei Steuereingänge 57 und 58 auf, die einerseits mit der Steuerschaltung 24 des jeweiligen Aktors 12a, 12b verbunden sind und andererseits mit einem Sensor 32 und/oder einem Schaltelement 34, wie einem Schalter oder Taster verbunden sein können. Durch Betätigung des Schaltelements 34 bzw. durch ein Sensorsignals wird ein Schaltsignal erzeugt und dieses in den Aktor12a, 12b eingespeist.

Die mögliche Anzahl der Versorgungsanschlüsse 51, 53, der Ausgänge 52, 54, der Anschlüsse 55, 56, der Verbraucher 10a, 10b, der Steuereingänge 57, 58, der Sensoren 32 und der Schaltelemente 34 ist nicht beschränkt.

## Patentansprüche

1. Aktor (12a, 12b, 12c) zur Leistungssteuerung wenigstens eines angeschlossenen Verbrauchers (10a, 10b, 10c, 10d), mit
einer Lasterfassungseinrichtung (22) zum Erfassen einer Lasthöhe und/oder einer Lastart des wenigstens einen Verbrauchers (10a, 10b, 10c, 10d) als eine die Last des wenigstens einen Verbrauchers betreffende Messgröße; und
einer Kommunikationsschnittstelle (16) zum Empfangen wenigstens einer Stellgröße für die Leistungssteuerung des wenigstens einen Verbrauchers (10a, 10b, 10c, 10d) und Senden der durch die Lasterfassungseinrichtung (22) erfassten Messgröße.

2. Aktor nach Anspruch 1,
**dadurch gekennzeichnet, dass**
er eine Steuerschaltung (24) zur Leistungssteuerung des wenigstens einen Verbrauchers (10a, 10b, 10c, 10d) aufweist, welche in Abhängigkeit von der durch die Lasterfassungseinrichtung (22) erfassten Messgröße nach einer von wenigstens zwei Steuerungsarten betreibbar ist, wobei die wenigstens zwei Steuerungsarten ausgewählt sind aus einer sinusförmigen Steuerung, einer Phasenabschnittsteuerung und einer Phasenanschnittsteuerung.

3. Aktor nach einem der vorhergehenden Ansprüche,
**dadurch gekennzeichnet,**
**dass** der Aktor (12a, 12b, 12c) wenigstens einen Versorgungsanschluss (51, 53) zur Spannungsversorgung und wenigstens einen Ausgang (52, 54) aufweist, über den eine eingespeiste Netzspannung unverändert durchschleifbar ist.

4. Aktor nach einem der vorhergehenden Ansprüche,
**dadurch gekennzeichnet,**
**dass** der Aktor (12a, 12b, 12c) wenigstens einen elektrischen Steuereingang (57, 58) zur Einspeisung eines Schaltsignals wenigstens eines externen Schaltelements (34) aufweist.

5. Aktor nach Anspruch 4,
**dadurch gekennzeichnet,**
**dass** ein Schaltzustand des Aktors (12a, 12b, 12c) unabhängig von der Polarität (L, N) der in dem wenigstens einen Steuereingang (57, 58) eingespeisten Spannung veränderbar ist.

6. Aktor nach Anspruch 4 oder 5,
**dadurch gekennzeichnet,**
**dass** der wenigstens ein Steuereingang (57, 58) derart konfigurierbar ist, dass abhängig von einer Dauer und/oder von einem Zustandswechsel eines anstehenden Schaltsignals eines Schaltelements (34) der Schaltzustand veränderbar ist.

7. Aktor nach einem der Ansprüche 4 bis 6,
**dadurch gekennzeichnet,**
**dass** der Aktor (12a, 12b, 12c) wenigstens zwei Steuereingänge (57, 58) aufweist, wobei jedem dieser Steuereingänge (57, 58) ein Schaltelement (34) zugeordnet ist, wobei die Steuereingänge (57, 58) derart konfigurierbar sind, dass bei Anstehen eines Schaltsignals eines Schaltelements (34) am ersten Steuereingang (57) ein erster Schaltzustand vorliegt und bei Anstehen eines Schaltsignals eines Schaltelements (34) am zweiten Steuereingang (58) ein zweiter Schaltzustand vorliegt.

8. Aktor nach Anspruch 7,
**dadurch gekennzeichnet,**
**dass** die Steuereingänge (57, 58) derart konfigurierbar sind, dass der erste und der zweite Schaltzustand durch ein kurzzeitiges Anstehen des Schaltsignals einstellbar sind und durch ein über einen längeren Zeitraum anstehendes Schaltsignal eine einem Verbraucher (10a, 10b, 10c, 10d) zuführbare Leistung veränderbar ist.

9. Aktor nach einem der Ansprüche 4 bis 8,
**dadurch gekennzeichnet,**
**dass** die Steuereingänge (57, 58) derart konfigurierbar sind, dass ein Wechsel in denselben Schaltzustand des Aktors (12a, 12b, 12c) auslösbar ist, unabhängig von der Polarität (L, N) eines Schaltsignals eines Schaltelements (34) und/oder von dem Steuereingang (57, 58), an dem ein Schaltsignal eines Schaltelements (34) ansteht.

10. Energiemanagementsystem, insbesondere Hausautomatisierungssystem, mit
mehreren Verbrauchern (10a, 10b, 10c, 10d);
wenigstens einer Steuereinheit (14);
wenigstens einem Aktor (12a, 12b, 12c) nach einem der Ansprüche 1 bis 9, welcher der wenigstens einen Steuereinheit (14) zugeordnet ist, zur Leistungssteuerung der Verbraucher (10a, 10b, 10c, 10d); und
wenigstens einer Kommunikationsverbindung (20) zwischen der wenigstens einen Steuereinheit (14) und dem wenigstens einen Aktor (12a, 12b, 12c).

11. Energiemanagementsystem nach Anspruch 10,
**dadurch gekennzeichnet, dass**
die wenigstens eine Steuereinheit (14) mit einer Auswerteeinrichtung (26) zum Auswerten der durch die Lasterfassungseinrichtungen (22) der Aktoren (12a, 12b, 12c) erfassten Messgrößen versehen ist.

12. Energiemanagementsystem nach Anspruch 10 oder 11,
**dadurch gekennzeichnet, dass**
die wenigstens eine Steuereinheit (14) mit einer Ausgabevorrichtung (28) zum Ausgeben der durch die Lasterfassungseinrichtungen (22) der Aktoren (12a, 12b, 12c) erfassten Messgrößen und/oder der Auswertungsergebnisse der Auswerteeinrichtung (26) versehen ist.

13. Energiemanagementsystem nach einem der Ansprüche 10 bis 12,
**dadurch gekennzeichnet, dass**
die wenigstens eine Steuereinheit (14) mit einer Eingabevorrichtung (30) zum Eingeben von Stellgrößen für die Leistungssteuerung der an die Aktoren (12a, 12b, 12c) angeschlossenen Verbraucher (10a, 10b, 10c, 10d) betreffenden Eingabegrößen versehen ist.

14. Energiemanagementsystem nach einem der Ansprüche 10 bis 13,
**dadurch gekennzeichnet,**
**dass** durch ein am Steuereingang (57, 58) eines Aktors (12a, 12b, 12c) anstehendes Schaltsignal der wenigstens eine zugeordnete Verbraucher (10a, 10b, 10c, 10d) dieses und/oder wenigstens eines über die Kommunikationsverbindung (20) verbundenen anderen Aktors (12a, 12b, 12c) ansteuerbar ist.

15. Energiemanagementsystem nach einem der Ansprüche 10 bis 14,
**dadurch gekennzeichnet,**
**dass** ein Aktor (12a) wenigstens einen Steuereingang (57) aufweist, dessen Aktivierung bewirkt, dass mittels der Kommunikationsschnittstelle bei einem Steuersignal, das durch eine erste Betätigungsabfolge charakterisiert ist, mindestens ein erster Verbraucher (10b, 10c, 10d) mindestens eines beliebigen Aktors (12b, 12c) oder der direkt angeschlossene Verbraucher (10a) geschaltet wird, und dass bei einem Steuersignal, das durch eine zweite (verschiedene) Betätigungsabfolge charakterisiert ist, mindestens ein zweiter Verbraucher (10d, 10e, ...) mindestens eines beliebigen Aktors (12d, 12e) geschaltet wird.
